# FASCICULE DE BREVET EUROPEEN

(11) **EP 2 944 068 B1**
(45) Date de publication et mention de la délivrance du brevet: **15.02.2017**
(21) Numéro de dépôt: 13818996.4
(22) Date de dépôt: 13.12.2013
(51) Int. Cl.: H04L 29/08, G06F 9/455

(54) **PROCEDE, BOITIER ET SYSTEME D'ACCES A UN SERVICE INFORMATIQUE AU TRAVERS D'UN RESEAU DE COMMUNICATION**
VERFAHREN, BEHÄLTER UND SYSTEM ZUM ZUGRIFF AUF EINEN RECHNERDIENST ÜBER EIN KOMMUNIKATIONSNETZ
METHOD, BOX, AND SYSTEM FOR ACCESSING A COMPUTER SERVICE VIA A COMMUNICATION NETWORK

(30) Priorité: 10.01.2013 FR 1350213
(43) Date de publication de la demande: 18.11.2015
(73) Titulaire: Virtuor, 75005 Paris (FR)
(72) Inventeur: BRAHAM, Othmen, F-94230 Cachan (FR); PUJOLLE, Guy, F-92320 Chatillon (FR)
(74) Mandataire: Pontet Allano & Associes
(86) Numéro de dépôt international: PCT/EP2013/076480
(87) Numéro de publication internationale: WO 2014/108271

(56) Documents cités:
- EP-A1- 2 464 083
- US-A1- 2008 209 279
- US-A1- 2012 266 159

## Description

L'invention concerne un procédé d'accès, par un terminal, à un service informatique fourni au travers d'un réseau de communication. Elle concerne également un boitier et un système mettant en oeuvre un tel procédé d'accès.

Le domaine de l'invention est le domaine de l'accès à un service fourni au travers d'un réseau de communication, tel qu'Internet, et en particulier l'accès à des services hébergés dans le Cloud, par un terminal utilisateur informatique. De tels services peuvent comprendre des services de stockage, des services de calcul, des services applicatifs divers et variés, des services médicaux, des services humanitaires, des services de réseaux sociaux, etc.

### Etat de la technique

De plus en plus, des services de stockage ou de traitements de données, traditionnellement localisés sur des serveurs locaux ou sur des terminaux utilisateurs, sont déportés sur des serveurs distants. Ce concept est connu sous le nom de « Cloud » ou de « Nuage informatique ».

Le fait de déporter les services et contenus sur des serveurs distants accessibles au travers d'un réseau de communication, qui est généralement l'Internet, nécessite des outils de connexion à ces services depuis un réseau local connecté au réseau de communication, un tel réseau pouvant être par exemple un réseau local professionnel ou un réseau domestique.

Or, les outils qui sont actuellement disponibles utilisent des piles protocolaires rigides et se comportent de la même manière quel que soit le service auquel un utilisateur souhaite accéder ou le contexte d'accès au service.

Le document de l'état de la technique US 2012/266159 décrit un procédé de sélection d'une classe de définition d'une composante d'un environnement en nuage.

Les outils existants ne permettent donc pas de proposer un accès souple et personnalisé à un service

L'invention a pour but de pallier les inconvénients précités.

Un but de l'invention est de proposer un procédé et un système d'accès à un service au travers d'un réseau de communication plus souple.

Un autre but de l'invention est de proposer un procédé et un système d'accès à un service au travers d'un réseau de communication personnalisable à souhait.

Enfin, il est un but de l'invention de proposer un procédé et un système d'accès à un service au travers d'un réseau de communication permettant un meilleur accès à un service donné quel qu'il soit.

### Exposé de l'invention

L'invention permet d'atteindre les buts précités par un procédé d'accès, par un terminal utilisateur, à un service informatique distant au travers d'un réseau de communication et d'un équipement informatique, dit boitier d'accès, ledit procédé comprenant les étapes suivantes :
- émission d'une requête d'accès audit service informatique dudit terminal utilisateur vers ledit boitier d'accès,
- exécution, dans ledit boitier d'accès, d'au moins un programme informatique, dit module de configuration,
- exécution, dans ledit boitier d'accès, d'au moins un équipement de réseau virtuel, dit de connexion, réalisant la connexion dudit terminal utilisateur audit module de configuration,
- sélection, par ledit module de configuration et en fonction d'au moins une donnée relative audit service informatique et/ou à un contexte d'accès audit service informatique, d'au moins une machine virtuelle à exécuter, dans ledit boitier d'accès et/ou à distance dudit boitier d'accès, pour établir une connexion avec au moins un serveur distant fournissant ledit service informatique, et
- déclenchement de l'exécution de ladite au moins une machine virtuelle pour fournir ledit service informatique audit terminal utilisateur.

Ainsi, pour chaque terminal utilisateur, le procédé selon l'invention permet de mettre en place au moins dans le boitier d'accès, et éventuellement dans le réseau local se trouvant en aval du boitier d'accès par rapport au terminal utilisateur, une configuration particulière et dépendant notamment du service accédé. Autrement dit, le boitier d'accès et le réseau se métamorphosent pour chaque terminal utilisateur en fonction de chaque service informatique accédé. Ainsi, tous les terminaux utilisateurs connectés au boitier d'accès ne voient pas le même réseau ou la même configuration de réseau, celle-ci étant créée et mise en place spécifiquement pour chaque terminal utilisateur et pour chaque service accédé. Par exemple, selon l'invention et de manière nullement limitative, la configuration du réseau vue par un terminal utilisateur souhaitant un service informatique de conversation audiovisuelle ne sera pas la même que celle du réseau vu par un terminal utilisateur souhaitant un service informatique d'échange de données bancaires.

Par conséquent, le procédé selon l'invention permet de modifier la vision qu'à chaque terminal utilisateur du réseau en fonction du service accédé, pour adopter la configuration la plus adaptée au service demandé. L'invention permet donc un meilleur accès au service demandé.

De plus, la configuration du réseau vue par un terminal utilisateur est construite individuellement et indépendamment pour chaque terminal. Ainsi, l'invention permet un accès plus personnalisé et personnalisable à souhait pour chaque terminal utilisateur.

En outre, selon l'invention la configuration du réseau s'adapte au terminal utilisateur et à sa demande, ce qui permet un accès plus souple au réseau par le terminal utilisateur.

De plus, les étapes d'exécution, de sélection et de déclenchement sont réalisées de manière automatisée, c'est-à-dire sans intervention de l'utilisateur, ce qui permet de réaliser une configuration du réseau tout à fait transparente pour l'utilisateur et donc un accès plus simple pour l'utilisateur.

Par exemple, le procédé selon l'invention permet à des terminaux utilisateurs connectés sur le même boitier d'accès de disposer de leur propre pile protocolaire, tel que IPv4 pour un premier terminal utilisateur, IPv6 pour un autre, MPLS pour un troisième, Ethernet Carrier Grade pour un quatrième, etc. Le procédé peut même permettre des configurations plus précises, par exemple en ayant un accès IPv4 avec uniquement UDP/IP et un logiciel spécifique de sécurité.

Avantageusement, au moins une donnée relative au service peut par exemple comprendre au moins une donnée relative à une pile protocolaire d'échange de données avec un serveur associé au serveur et/ou au moins une donnée relative à une interface d'accès spécifique au service demandé, et plus particulièrement au moins une donnée relative à un paramètre de sécurité, un paramètre d'économie d'énergie, un paramètre d'un opérateur auprès duquel un abonnement est souscrit, un paramètre de qualité de service tel qu'un taux de perte de paquet, un temps de réponse, un débit, etc.).

Au moins une donnée relative au service peut être déterminée par analyse de la requête d'accès et/ou par connexion à un serveur distant associé ou non au service.

Au moins une donnée relative à un contexte d'accès au service peut comprendre une donnée relative :
- au type de connexion avec le boitier d'accès, par exemple accès WiFi d'un type avec un type de sécurité, accès avec des trames de tel type (Ethernet en général),
- à une qualité de service requis sur l'accès : ce qui poussera par exemple à mettre un point d'accès virtuel IEEE802.11e avec une qualité de service donnée,
- à une priorité du flot de paquets : ce qui poussera à mettre une valeur spécifique dans le champ IEEE 802.1p,
- à un transport d'un flux de type par exemple MPEG4, transport d'un flux ToIP avec tel CODEC, etc.

Plus généralement, au moins une donnée relative à un contexte d'accès au service peut comprendre une donnée relative à une spécification de la connexion locale au réseau de communication et/ou au moins une donnée relative à au moins une caractéristique de la pile protocolaire d'échange de données du terminal utilisateur avec le réseau de communication.

Au moins une donnée relative à un contexte d'accès au service peut être déterminée par :
- accès à un profil prédéfini, par exemple mémorisé en relation avec un abonnement de l'utilisateur chez un opérateur,
- analyse d'une adresse IP ou MAC pour déterminer par exemple une position du terminal utilisateur, et/ou
- échange de données avec le terminal utilisateur.

Selon un mode de réalisation de l'invention, le boitier peut être dédié à un seul service.

Selon un autre mode de réalisation de l'invention, le boitier peut être utilisé pour accéder à une pluralité de services informatiques offerts par un opérateur ou une pluralité d'opérateurs.

Dans ce cas, le procédé selon l'invention peut en outre comprendre une étape d'analyse de la requête d'accès pour identifier le service auquel le terminal utilisateur souhaite accéder, notamment dans le cas où le boitier d'accès permet d'accéder à différents services et n'est pas conçu pour l'accès à un unique service.

Une telle analyse peut être réalisée en local, c'est-à-dire dans le boitier d'accès.

Alternativement, une telle analyse peut être réalisée à distance du boitier d'accès par un serveur distant, dit de rattachement, associé au boitier d'accès. Dans ce cas, le procédé selon l'invention peut en outre comprendre une connexion dudit boitier d'accès audit serveur de rattachement préalablement à une telle analyse. La requête ou au moins une partie de la requête est alors transmise au serveur distant pour analyse.

Chaque module de configuration est spécifique à un service informatique proposé à un opérateur ou à un opérateur proposant un ou des services informatiques.

Selon un premier mode de réalisation, le module de configuration peut être pré-mémorisé dans le boitier d'accès, préalablement à l'étape d'émission de la requête d'accès. En effet, il peut être envisagé de pré-mémoriser dans le boitier d'accès des modules de configuration spécifiques à chacun des opérateurs de service les plus connus, etc. Dans ce cas, un module de configuration associé à un opérateur peut être activé sur demande suite à la réception d'une requête d'accès fourni par cet opérateur.

Selon un deuxième mode de réalisation alternatif et préféré, le module de configuration, qui peut être un module associé à un opérateur sur lequel l'utilisateur est abonné ou à une entreprise dans laquelle l'utilisateur travaille, peut être chargé dans le boitier d'accès depuis un serveur distant dudit boitier d'accès au travers du réseau de communication, après l'étape d'émission de la requête d'accès. Dans ce cas, le module de configuration peut être mémorisé dans le Cloud.

Le chargement du module de configuration peut être réalisé après réception de la requête d'accès, ou le cas échéant, après une étape d'identification du service informatique demandé.

Chaque module de configuration associé à un opérateur peut être mémorisé sur :
- un même serveur : dans ce cas ce serveur mémorise tous les ou plusieurs modules de configuration dans une base de données ; et/ou
- un serveur associé/dédié à l'opérateur : dans ce cas chaque module de configuration est mémorisé sur un serveur différent et associé à l'opérateur pour lequel il a été conçu. Les modules de configuration dépendent en général d'un opérateur ou d'une entreprise et ils sont mémorisés dans le Cloud de l'opérateur ou de l'entreprise.

Bien entendu ces deux modes de réalisation peuvent être combinés pour un même service ou pour des services différents.

Par exemple, pour un premier opérateur proposant un service informatique le module de configuration peut être pré-mémorisé dans le boitier d'accès, et pour un deuxième opérateur le module de configuration peut être chargé depuis un serveur distant dédié à cet opérateur ou un serveur commun à plusieurs opérateurs.

Selon un autre exemple non limitatif, pour un service donné le module de configuration peut être chargé depuis un serveur. Après utilisation, le module de configuration peut être gardé, soit pour une durée prédéterminée soit définitivement, dans une mémoire du boitier d'accès. Ainsi, lorsque le même utilisateur ou un autre utilisateur désire le service donné, le module de configuration déjà présent dans le boitier d'accès est réutilisé, ce qui diminue le temps d'accès au service informatique.

Lorsqu'un module de configuration est chargé depuis un serveur distant, le chargement du module de configuration depuis le serveur distant peut être déclenché par un autre serveur distant du boitier d'accès, dit de rattachement.

Dans ce cas, le procédé selon l'invention comprend en outre une étape de connexion dudit boitier d'accès audit serveur de rattachement préalablement au déclenchement du chargement.

Un tel serveur de rattachement peut être un serveur associé au boitier d'accès lors de sa fabrication ou un serveur d'un opérateur associé au boitier d'accès.

Alternativement, le chargement du module de configuration depuis le serveur distant peut être déclenché par le boitier d'accès lui-même.

Selon un mode de réalisation préféré, l'équipement de connexion réseau virtuel est chargé dans le boitier d'accès depuis un serveur distant dudit boitier d'accès au travers du réseau de communication, préalablement à son exécution et suite à l'étape d'émission de la requête d'accès.

Selon un autre mode de réalisation, l'équipement de connexion réseau virtuel peut être mémorisé dans le boitier d'accès, préalablement à l'étape d'émission de la requête d'accès.

Bien entendu ces deux modes de réalisation peuvent être combinés pour un même service informatique ou pour des services informatiques différents, tel que décrit plus haut pour le module de configuration.

L'équipement de connexion réseau virtuel peut être un point d'accès virtuel, en particulier un point d'accès Wifi virtuel, dédié au module de configuration et gérant la connexion du terminal d'utilisateur avec un réseau local se trouvant entre le boitier d'accès et le réseau de communication ou directement avec le réseau de communication.

Le procédé selon l'invention peut en outre comprendre un déclenchement, par ledit module de configuration, de l'exécution d'au moins une machine virtuelle à distance dudit boitier d'accès, par exemple sur un équipement physique d'un réseau local se trouvant entre le boitier d'accès et le réseau de communication, ou sur un équipement physique du réseau de communication, ou sur un équipement physique se trouvant entre le réseau de communication et un serveur associé au service, ou encore sur un serveur associé au service informatique.

Selon un mode de réalisation préféré, au moins une machine virtuelle peut être obtenue par instanciation d'une machine virtuelle mémorisée localement dans le boitier d'accès.

Une telle instanciation peut comprendre une activation d'une machine virtuelle inactive au niveau du boitier d'accès, puis une caractérisation de cette machine virtuelle en termes de ressources et de pile protocolaire.

L'instanciation peut être réalisée/déclenchée, par le module de configuration, en fonction de données relatives au service et/ou de données relatives au contexte d'accès au service telles que décrites précédemment.

L'instanciation peut être réalisée par l'intermédiaire d'un programme hyperviseur installé sur le boitier d'accès et contrôlant les différentes machines virtuelles sur le boitier d'accès.

Alternativement au moins une machine virtuelle peut être chargée depuis un appareil distant, qui peut être un serveur associé au service demandé, avant ou après caractérisation de la machine virtuelle.

Avantageusement, le procédé selon l'invention peut en outre comprendre une mise à jour d'au moins une machine virtuelle et/ou d'au moins un équipement de connexion réseau virtuel en cours d'utilisation en fonction d'au moins une donnée relative au contexte d'accès et/ou au service utilisé.

Pour cela le module de configuration réalise une surveillance des données de contexte et/ou des données relatives au service utilisé, par exemple par utilisation d'un filtre logicielle agencé pour détecter les applications utilisées par terminal utilisateur et/ou par une signalisation SIP du terminal utilisateur ou de l'opérateur du service informatique. Lorsque ces données changent, le module de configuration peut modifier une machine virtuelle et/ou un équipement de connexion réseau virtuel utilisés pour le service, par exemple en fonction d'au moins un paramètre prédéterminé.

Lorsque le procédé selon l'invention est utilisé pour la gestion de l'accès d'au moins deux terminaux utilisateurs à au moins un service au travers d'au moins un réseau de communication, tel que le réseau Internet, et d'un même boitier d'accès, le procédé selon l'invention est exécuté individuellement et indépendamment pour chaque terminal utilisateur de sorte que le boiter d'accès comprend, pour chaque terminal :
- un module de configuration, et
- un ensemble, dit container-relais, comprenant un équipement de connexion réseau virtuel et au moins une machine virtuelle.

Pour cela le boitier d'accès comprend une plateforme de virtualisation, appelé hyperviseur, permettant l'exécution de plusieurs systèmes d'exploitation en même temps et de manière indépendante.

Selon un autre aspect de l'invention il est proposé un appareil informatique, dit boitier d'accès, pour l'accès d'au moins un terminal utilisateur à au moins un service informatique distant au travers d'un réseau de communication de type Internet, ledit appareil comprenant :
- au moins un moyen de connexion à au moins un terminal utilisateur,
- au moins un moyen de connexion à un réseau local ou à un réseau de communication de type Internet, et
- des moyens configurés pour réaliser les étapes suivantes pour chaque terminal utilisateur connecté audit appareil :
   - réception d'une requête d'accès à un service informatique dudit terminal utilisateur,
   - exécution d'au moins un programme informatique, dit module de configuration,
   - exécution d'au moins un équipement de réseau virtuel, dit de connexion, réalisant la connexion dudit terminal utilisateur audit module de configuration,
   - sélection, par ledit module de configuration et en fonction d'au moins une donnée relative audit service informatique et/ou d'au moins une donnée relative au contexte d'accès, d'au moins une machine virtuelle à exécuter pour établir une connexion avec au moins un serveur distant fournissant ledit service demandé, et
   - déclenchement de l'exécution de ladite au moins une machine virtuelle pour fournir ledit service audit terminal utilisateur.

Chacune des fonctionnalités et caractéristiques précédemment décrites s'applique seule ou en combinaison au boitier d'accès et ne sera pas répétée ici pour éviter des lourdeurs rédactionnelles.

Selon encore un autre aspect de l'invention, il est proposé un système d'accès à au moins un service informatique au travers d'un réseau de communication caractérisé en ce qu'il comprend :
- au moins un terminal utilisateur,
- au moins un serveur distant associé audit au moins un service informatique ; et
- soit au moins un équipement informatique, dit boitier d'accès, selon l'invention, disposé entre ledit au moins un terminal utilisateur et ledit réseau de communication,
- soit des moyens pour mettre en oeuvre toutes les étapes du procédé selon l'invention.

Selon l'invention le boitier d'accès peut être mis en oeuvre soit pour un usage personnel, soit pour un usage collectif, tel qu'un usage domestique ou un usage salle de congrès ou hôtel permettant à chaque utilisateur d'avoir sa connexion personnalisée à son opérateur, soit pour un usage en entreprise, par exemple pour remonter des données mesurées par des capteurs vers un serveur distant.

Selon l'invention, le terminal utilisateur peut être un ordinateur personnel, un serveur, un Smartphone, une tablette, ou tout autre appareil informatique, éventuellement relié à un ou des capteurs.

D'autres avantages et caractéristiques apparaîtront à l'examen de la description détaillée d'exemples nullement limitatifs, et des dessins annexés sur lesquels :
- la FIGURE 1 est une représentation schématique d'un exemple de procédé selon l'invention ;
- la FIGURE 2 est une représentation schématique d'un exemple de boitier selon l'invention ; et
- les FIGURES 3-8 sont une représentation schématique d'un exemple de système selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieur. Cette sélection comprend au moins une caractéristique de préférence fonctionnelle sans détails structurels, ou avec seulement une partie des détails structurels si cette partie uniquement est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

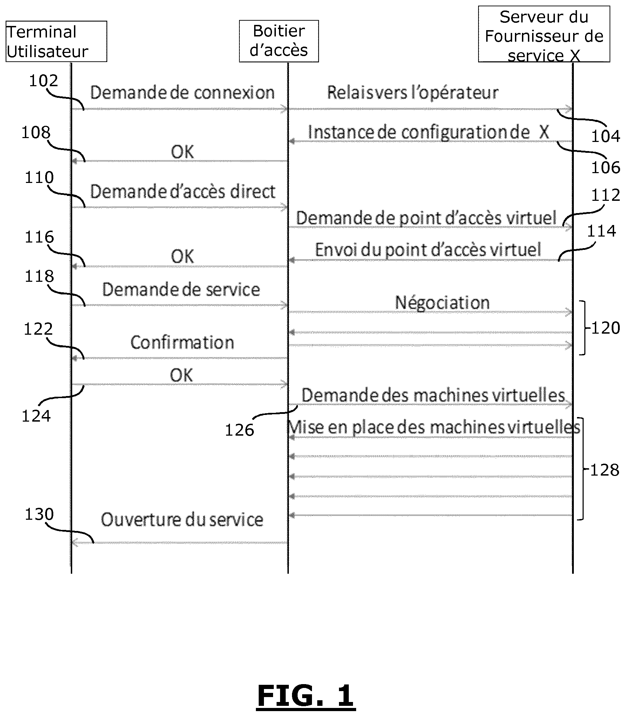

La FIGURE 1 est une représentation schématique d'un exemple de procédé selon l'invention.

Le procédé 100 représenté sur la FIGURE 1 comprend une étape 102 d'émission par le terminal utilisateur vers un boitier d'accès d'une requête d'accès à un service X.

Lors d'une étape 104, la requête d'accès reçue par le boitier d'accès est analysée pour identifier le service souhaité par le terminal utilisateur, et après identification du service souhaité, la requête d'accès est relayée par le boitier d'accès vers un serveur du Fournisseur de service X au travers d'un réseau de communication de type Internet.

En réponse à la requête d'accès, une instance d'un module de configuration associé au service X est alors chargée depuis le serveur du Fournisseur d'accès X vers le boitier d'accès, lors d'une étape 106.

Le boiter d'accès en avertit le terminal utilisateur lors d'une étape 108 optionnelle.

Dès lors que le terminal utilisateur est averti du chargement du module de configuration une requête d'accès direct au service X est émise par le terminal utilisateur vers le boitier d'accès lors d'une étape 110. Cette étape 100 est optionnelle.

Ensuite, une étape 112 émet une requête de chargement d'un équipement de connexion réseau virtuel, et en particulier d'un point d'accès virtuel, vers le serveur du Fournisseur de service X par le module de configuration.

Le point d'accès virtuel, qui est par exemple un point d'accès Wifi virtuel, est chargé sur le boitier d'accès lors d'une étape 114.

Le boiter d'accès en avertit le terminal utilisateur lors d'une étape 116 optionnelle.

Lors d'une étape optionnelle 118 le terminal utilisateur demande l'accès au service X auprès du boitier d'accès.

Alternativement, lors de l'étape 102 le terminal utilisateur peut émettre une demande de service en même temps que la demande de connexion. Dans ce cas, l'étape 118 n'est pas réalisée.

Une étape optionnelle 120 de négociation est alors initiée entre le boitier d'accès le serveur du Fournisseur de service X.

L'obtention de l'accord d'accès est notifiée au terminal utilisateur lors d'une étape optionnelle 122.

Le terminal utilisateur confirme la réception de cette notification lors d'une étape optionnelle 124.

Lors d'une étape 126 les machines virtuelles permettant l'accès au service X, ou leur configuration, sont demandées au serveur distant associé au service X.

Lors d'une étape 128, les machines virtuelles, ou les configurations des machines virtuelles, permettant l'accès au service X sont installées/configurées et exécutées dans le boitier d'accès, et éventuellement dans au moins un autre équipement physique se trouvant entre le boitier d'accès et le serveur associé au service X.

L'accès au service X est ouvert au terminal utilisateur lors d'une étape 130.

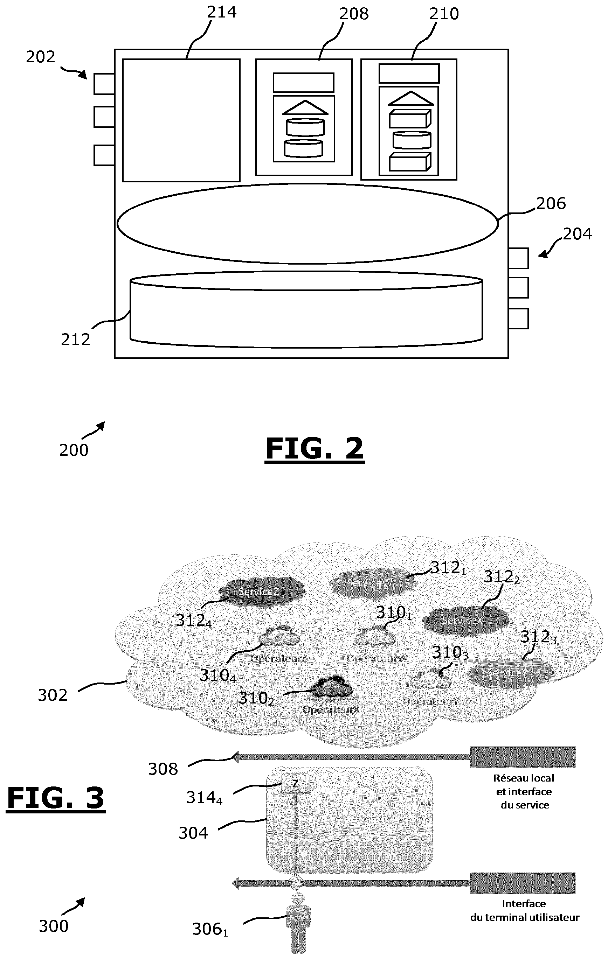

La FIGURE 2 est une représentation schématique d'un exemple de boitier d'accès selon l'invention.

Le boitier d'accès 200 représenté sur la FIGURE 2 comprend des premiers moyens 202 de connexion filaire ou sans fil à un ou des terminaux utilisateurs.

Le boitier 200 comprend également des deuxièmes moyens de connexion à un réseau de communication de type Internet ou un réseau local lui-même connecté à Internet.

Ces premiers et/ou deuxièmes moyens de connexion peuvent comprendre des connecteurs filaires tels que des connecteurs USB, Ethernet, etc. et/ou des moyens de connexion sans fil de type Wifi, Bluetooth, NFC etc.

Le boitier d'accès comprend également une plate-forme de virtualisation 206, appelée hyperviseur, qui dans l'exemple présent est le logiciel XEN. Le logiciel XEN, comme tout logiciel hyperviseur, permet de faire fonctionner plusieurs systèmes d'exploitation (NOS) sur un même appareil physique, chacun de ces systèmes d'exploitation réalisant un noeud virtuel permettant d'exécuter un module de configuration, un point d'accès ou généralement un équipement de connexion réseau virtuel, et une ou des machines virtuelles. Dans l'exemple représenté sur la FIGURE 2, deux containers-relais 208 et 210 qui regroupent un ensemble de noeuds virtuels sont exécutés sur le boitier d'accès.

Le boitier d'accès 200 comprend en outre un moyen de mémorisation 212 permettant de mémoriser au moins une machine virtuelle, et/ou au moins un module de configuration et/ou au moins un équipement de connexion réseau virtuel et/ou des données de configuration d'au moins un de ces éléments.

Le boitier d'accès 200 comprend également un module de configuration 214, éventuellement associé à un opérateur de service qui gère l'accès Internet du boitier d'accès 200. L'opérateur auquel est associé le module de configuration 214 est, en général, différent d'un opérateur sur lequel l'utilisateur possède un abonnement d'accès à un service. Par exemple, si le boitier d'accès est celui d'un hôtel, ce dernier a son propre opérateur et l'utilisateur client de l'hôtel a un opérateur différent.

Ce module de configuration 214 permet de connecter le boitier d'accès 200 d'une part à au moins un terminal utilisateur et d'autre part à un réseau de communication ou à un réseau local lui-même connecté à un réseau de communication, avant l'accès à un service. La connexion gérée par ce module de connexion est indépendante du service demandé par un terminal utilisateur et constitue un réseau de signalisation permettant de communiquer avec le boitier d'accès.

Le boitier d'accès 200 comprend en outre des logiciels de contrôle et des pilotes de périphériques physiques dudit boitier 200.

Les FIGURES 3 à 8 sont des représentations schématiques d'un exemple de système d'accès à des services selon l'invention mettant en oeuvre un exemple de procédé d'accès selon l'invention.

Le système 300 représenté sur les FIGURES 3-8 permet l'accès à des services hébergés dans le Nuage informatique 302 et accessible au travers du réseau Internet.

Le système 300 comprend un boitier d'accès 304 disposé entre un terminal utilisateur 306₁ et un réseau local de communication 308 connecté au Nuage 302 au travers du réseau Internet.

Dans le système représenté sur les FIGURES 3-8, le boitier d'accès 304 est associé à un opérateur 310₄, dit de rattachement, proposant un service informatique 312₄ hébergé dans le Nuage. Ainsi, le boitier d'accès 304 comprend un module de configuration 314₄ préalablement installé dans le boitier d'accès 304 et permettant de le connecter à l'opérateur 310₄, c'est-à-dire à un serveur de l'opérateur 310₄ au travers du réseau local de communication 308 et du réseau de communication Internet.

Le nuage informatique 302 comprend, de manière nullement limitative, trois autres opérateurs 310₁-310₃, chacun proposant un service, respectivement 312₁-312₃, hébergés dans le nuage 302.

Le boitier d'accès 304 peut être le boitier 200 de la FIGURE 2.

Nous allons maintenant décrire un exemple de procédé d'accès à un service informatique avec le système 300. Cependant, le système 300 n'est pas limité à cet exemple et peut être utilisé pour mettre en oeuvre d'autres modes de réalisation d'un procédé d'accès selon l'invention, par exemple le procédé 100 décrit en référence à la FIGURE 1.

Lors d'une étape, représentée sur la FIGURE 3, le boitier d'accès 304 se connecte à l'opérateur de rattachement 310₄ par l'intermédiaire de protocoles légers (HTTP, Websocket, IRC, etc.). Ce rattachement est réalisé plus particulièrement par le module de rattachement 314₄ préalablement installé dans le boitier d'accès 304. Le module de rattachement 314₄ analyse les demandes d'accès des terminaux utilisateurs et la sémantique associée et s'auto-configure en fonction de la connexion locale et des configurations déjà identifiées pour le contexte identifié ou en utilisant des configurations familières liées à la nature du réseau local. Dans le cas où le module de configuration 314₄ n'arrive pas à se connecter à l'opérateur de rattachement, le module de connexion 314₄ peut utiliser les paramètres de la connexion locale, c'est-à-dire du réseau local auquel il est connecté. Dans ce cas, le responsable du réseau local a préalablement entré toutes les options de configuration nécessaires en utilisant une interface interactive gérée par le module de configuration 314₄.

L'utilisateur peut directement associer le terminal utilisateur, au boitier d'accès et plus particulièrement au module de configuration 314₄, moyennant les différents ports disponibles d'entrée/sortie sur le boitier d'accès 304 tels que des ports WiFi, Ethernet, USB, Bluetooth, HDMI, etc.

La connexion établie avec l'opérateur 310₄ peut également être utilisée comme un réseau de signalisation pour mieux opérer et servir l'utilisateur connecté sur le boitier d'accès 304.

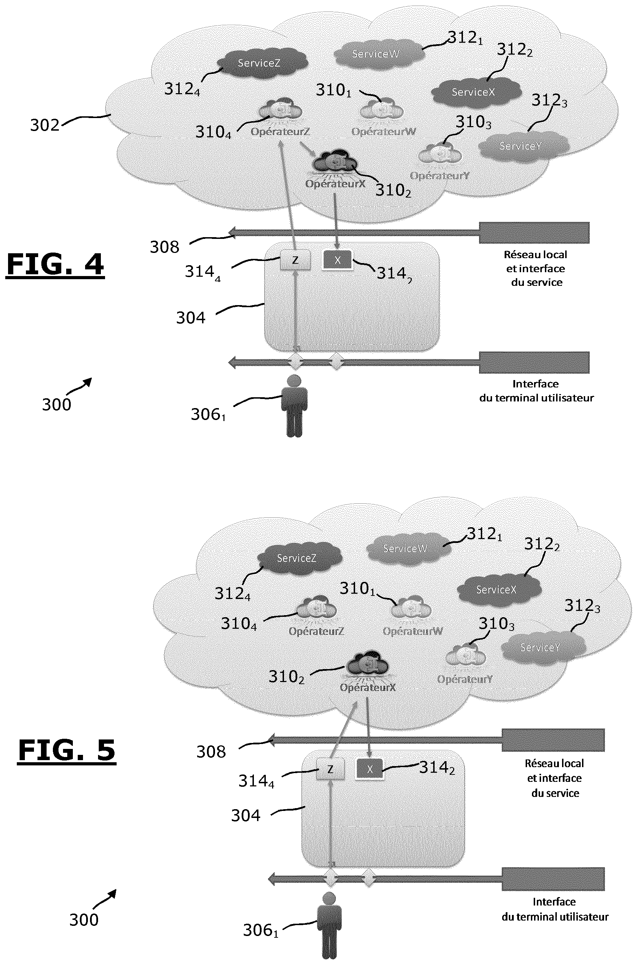

Lors d'une étape suivante, dont deux variantes sont représentées sur la FIGURE 4 et la FIGURE 5, l'utilisateur et/ou son terminal peuvent demander l'accès à un service informatique, qui peut être un service de l'opérateur 310₄ ou bien à un autre opérateur/fournisseur de services 310₁-310₃. Dans l'exemple représenté sur les FIGURES 4 et 5, le terminal utilisateur souhaite accéder à un service de l'opérateur 310₂.

Cette demande d'accès déclenche une requête qui atteint l'opérateur 310₂, soit en passant par l'opérateur de rattachement 310₄ dans la variante représentée sur la FIGURE 4, soit directement l'opérateur 310₂ dans la variante représentée sur la FIGURE 5. L'opérateur 310₂ fait alors migrer, vers le boitier d'accès 304, un module de configuration 314₂ avec lequel le terminal utilisateur va négocier le service souhaité.

Alternativement un module de configuration 314₂ inactif peut être préalablement mémorisé dans le boitier d'accès 304. Dans ce cas, le point d'accès inactif 314₂ est activé.

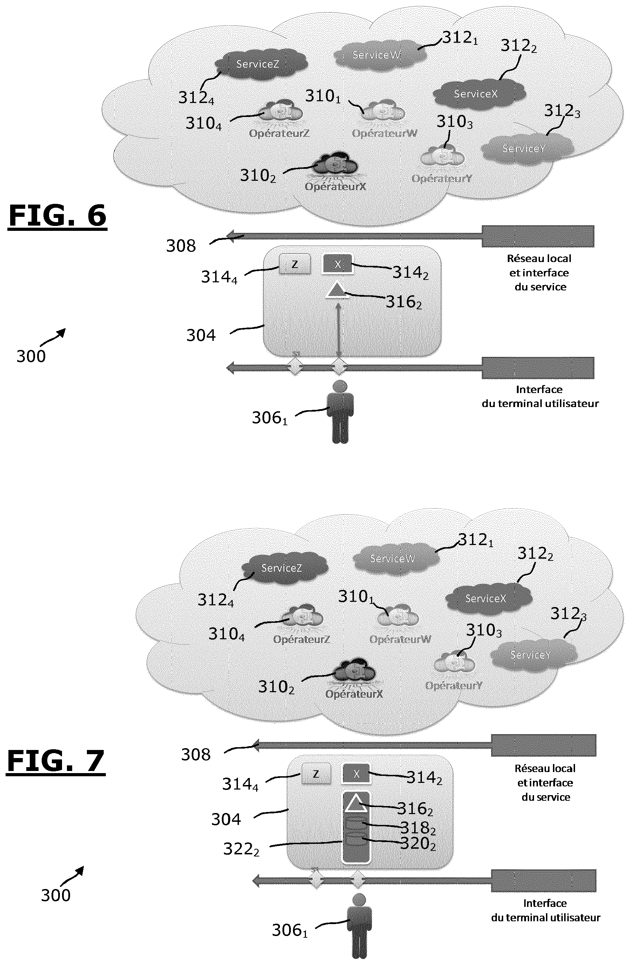

Lors d'une étape, représentée sur la FIGURE 6, est migré dans le boitier d'accès 304, un point d'accès WiFi virtuel 316₂ ou tout autre type d'équipement de connexion réseau virtuel, pour que le terminal utilisateur 306₁ puisse se connecter directement au module de configuration 314₂.

Alternativement un point d'accès inactif 316₂ peut être préalablement mémorisé dans le boitier d'accès 304. Dans ce cas, le point d'accès inactif 316₂ est activé.

Suite à l'étape représentée sur la FIGURE 6, le terminal client 306₁ peut communiquer directement avec le module de configuration 314₂ par l'intermédiaire du point d'accès 316₂.

Lors d'une étape suivante, représentée sur la FIGURE 7, le module de configuration détermine, en fonction du contexte d'accès et après discussion avec le terminal utilisateur 306₁ ou de façon automatique, les machines virtuelles dont le terminal utilisateur a besoin pour réaliser/accéder le/au service informatique demandé. Le service informatique sera réalisé grâce à un ensemble de machines virtuelles 318₂ et 320₂ qui vont s'installer et s'exécuter dans le boitier d'accès 304 et qui sont regroupées en un ensemble 322₂, dit un containeur-relais. Le containeur-relais 322₂ est associé à l'opérateur 310₂ et au terminal utilisateur 306₁ et contient donc toutes les machines virtuelles nécessaires pour réaliser d'une part l'interface avec le terminal client 306₁, pour rendre le service demandé en local, et d'autre part pour permettre de mettre en place l'interface avec l'opérateur 310₂ se trouvant dans le Nuage Informatique 302.

Les machines virtuelles nécessaires pour rendre le service peuvent soit migrer vers le boitier d'accès 304 depuis un serveur distant, soit être instanciées dans le boitier d'accès 304 par mise en route de machines virtuelles inactives mémorisée localement, soit rester à distance dans le Cloud, soit un mixte des cas précédents.

Les machines virtuelles 318₂ et 320₂ sont caractérisées en termes de ressource à allouer et de piles protocolaires nécessaires. De plus, le boitier d'accès 304 collecte les données relatives au contexte d'utilisation, analyse et décide des spécifications les mieux adaptées pour que l'accès de l'utilisateur soit le plus souple possible et ceci sans intervention de sa part.

Par exemple, quel que soit le mode de réalisation, les informations collectées sur le contexte d'utilisation peuvent être structurées en format RDF selon l'ontologie définie par l'opérateur.

Une fois que le module de configuration 314₂ trouve la solution la plus adéquate pour l'accès du terminal utilisateur 306₁ au service informatique demandé, les machines virtuelles associées sont mises en place pour former le container-relais 322₂, certaines machines pouvant être instanciées et d'autres pouvant rester dans le Nuage Informatique. Le module de configuration alloue à chaque machine virtuelle les ressources nécessaires et les piles protocolaires requises par le service informatique demandé.

A l'étape représenté sur la FIGURE 7, l'interface avec l'opérateur de service peut être établie en utilisant un tunnel reliant directement le containeur-relais 322₂ et les machines virtuelles 318₂, 320₂ de l'opérateur 310₂, ce tunnel pouvant être pris en charge par une des machines virtuelles du containeur-relais 322₂. Le terminal utilisateur 306₁ communique directement avec le containeur-relais 322₂ par un point d'accès WiFi virtuel 316₂ ou toute autre solution telle que le Bluetooth, NFC, Ethernet, USB, etc.

Durant le transfert/échange des données entre le terminal utilisateur 306₁ et les machines virtuelles, se trouvant dans le container-relais 322₂ ou dans le nuage Informatique, le module de configuration 314₂ garde pour objectif le maintien de la connexion et la satisfaction des exigences variables des deux interfaces de l'utilisateur et de l'opérateur, ainsi que des fonctionnalités liées au service et aux transmissions de données.

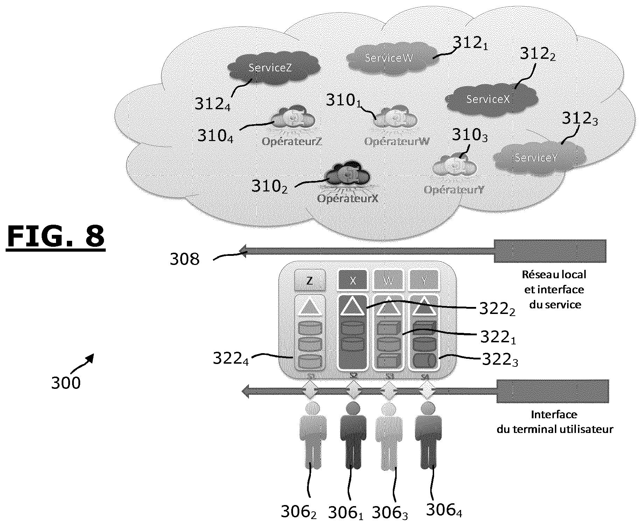

La FIGURE 8 représente quatre terminaux utilisateurs 306₁-306₄ accédant chacun à un service informatique différent. Pour chaque terminal utilisateur 306₁-306₄ un module de configuration spécifique, 314₁-314₄, et un container-relais spécifique 322₁-322₄, sont mis en place de manière individuelle et indépendante pour que chaque utilisateur accède au service qu'il demande de manière personnalisée.

Chaque terminal utilisateur 306₁-306₄ voit son propre réseau avec ses propres caractéristiques et sa propre configuration : le réseau se métamorphose pour s'adapter à chaque terminal utilisateur du côté utilisateur et aux différents services fournies du côté fournisseurs.

Les ressources virtuelles du boitier d'accès 304 peuvent être mutualisées en fonction des terminaux. Si plusieurs terminaux utilisateurs d'un même opérateur sont géographiquement localisés au voisinage du boitier d'accès, ils peuvent se connecter simultanément en utilisant certaines machines virtuelles communes, par exemple le point d'accès WiFi virtuel. En effet, il est possible que les utilisateurs d'un même service informatique fourni par un même opérateur puissent partager le même point d'accès virtuel, et/ou les mêmes machines virtuelles adaptées au service pour y accéder.

L'instance de configuration peut décider d'adapter les ressources nécessaires aux machines virtuelles contenues dans le container-relais dédié au point d'accès virtuel.

Les stratégies de partage des ressources du boitier d'accès entre opérateurs dépendent des accords entre ces opérateurs. Dans le cas d'un boitier d'accès personnel lié à un opérateur, les connexions de terminaux utilisateurs situés au voisinage du boitier d'accès peuvent être considérées comme des connexions invitées. Ces terminaux utilisateurs invités peuvent avoir un accès restreint au module de configuration de l'opérateur du boitier personnel. Ils peuvent par exemple sélectionner les services proposés par l'opérateur du boitier d'accès. Les invités aux alentours du boitier d'accès peuvent aussi solliciter une instance de configuration de leur propre opérateur. Les opérateurs invités peuvent utiliser les ressources disponibles selon les permissions de l'opérateur du boitier d'accès. Une fois que le module de configuration de l'opérateur invité s'exécute dans le boitier d'accès, l'utilisateur invité peut y accéder directement pour se servir des services que lui offre son opérateur. Les fonctionnalités offertes aux utilisateurs visiteurs sont alors les mêmes que celles des utilisateurs de l'opérateur du boitier. Plusieurs points d'accès virtuels peuvent être spontanément créés pour satisfaire simultanément différents besoins.

Quel que soit le mode de réalisation du procédé, ou du système selon l'invention, lorsqu'un terminal utilisateur n'a plus besoin du service informatique mis en place pour lui, le module de configuration et les machines virtuelles associées peuvent être mis en veille ou désactivés. En particulier, lorsque les machines virtuelles sont mises en veille, la configuration associée peut être placée dans un cache du boitier d'accès pour une meilleure réactivité en cas d'utilisation future. Le boitier d'accès peut être configuré de sorte que les configurations utilisées pour un terminal utilisateur donné et/ou pour un service informatique donné ne peuvent être supprimées que sur demande.

Bien entendu l'invention n'est pas limitée aux exemples qui viennent d'être décrits.

## Revendications

1. Procédé (100) d'accès, par un terminal utilisateur (106), à un service informatique distant (312) au travers d'un réseau de communication (302) et d'un équipement informatique (304), dit boitier d'accès, ledit procédé comprenant les étapes suivantes :
- émission (102) d'une requête d'accès audit service informatique (312), dudit terminal utilisateur (106) vers ledit boitier d'accès (304),
- exécution (106), dans ledit boitier d'accès (304), d'au moins un programme informatique (314), dit module de configuration,
- exécution (114), dans ledit boitier d'accès (304), d'au moins un équipement de réseau virtuel (316), dit de connexion, réalisant la connexion dudit terminal utilisateur (304) audit module de configuration (314),
- sélection (126), par ledit module de configuration (304) et en fonction d'au moins une donnée relative audit service informatique (312) **et/ou** d'au moins une donnée relative au contexte d'accès, d'au moins une machine virtuelle (318,320) à exécuter pour établir une connexion avec au moins un serveur (310) distant fournissant ledit service informatique (312), et
- déclenchement (128) de l'exécution de ladite au moins une machine virtuelle (318-320) pour fournir ledit service informatique (312) au niveau audit terminal utilisateur (304).

2. Procédé (100) selon la revendication 1, **caractérisé en ce qu'**il comprend en outre une étape d'analyse de la requête d'accès pour identifier le service auquel le terminal utilisateur (306) souhaite accéder.

3. Procédé (100) selon l'une quelconque des revendications précédentes, **caractérisé en ce que** le module de configuration (314) est chargé dans le boitier d'accès (304) depuis un serveur distant (310) dudit boitier (304) au travers du réseau de communication (302), après l'étape (102) d'émission de la requête d'accès.

4. Procédé (100) selon la revendication précédente, **caractérisé en ce que** le chargement du module de configuration (314) depuis un serveur distant (310) est déclenché par un autre serveur distant du boitier d'accès (304), dit de rattachement.

5. Procédé (100) selon l'une quelconque des revendications précédentes, **caractérisé en ce que** l'équipement de connexion de réseau virtuel (316) est chargé dans le boitier d'accès (304) depuis un serveur (310) distant dudit boitier (304) au travers du réseau de communication (302), préalablement à son exécution.

6. Procédé (100) selon l'une quelconque des revendications précédentes, **caractérisé en ce que** l'équipement de connexion réseau virtuel (316) est un point d'accès virtuel, en particulier un point d'accès Wifi, dédié au module de configuration (314).

7. Procédé (100) selon l'une quelconque des revendications précédentes, **caractérisé en ce qu'**il comprend en outre un déclenchement par ledit module de configuration (314) de l'exécution d'au moins une machine virtuelle à distance dudit boitier d'accès (304).

8. Procédé selon l'une quelconque des revendications précédentes, **caractérisé en ce qu'**au moins une machine virtuelle (318,320) est obtenue par instanciation d'une machine virtuelle mémorisée localement dans le boitier d'accès (304).

9. Procédé selon l'une quelconque des revendications précédentes, **caractérisé en ce qu'**il comprend une mise à jour d'au moins une machine virtuelle (318,320) et/ou d'au moins un équipement de connexion réseau virtuel (316) en cours d'utilisation en fonction d'au moins une donnée relative au contexte d'accès et/ou au service.

10. Procédé (100) de gestion d'accès d'au moins deux terminaux utilisateurs (306₁-306₄) à au moins un service (312₁-312₄) au travers d'au moins un réseau de communication (302) et d'un même boitier d'accès (304), **caractérisé en ce qu'**il comprend une exécution individuelle et indépendante du procédé d'accès selon l'une quelconque des revendications précédentes pour chaque terminal utilisateur (306₁-306₄) de sorte que le boiter d'accès (304) comprend, pour chaque terminal utilisateur (306₁-306₄) :
- un module de configuration (314₁-314₄), et
- un ensemble (322₁-322₄), dit container-relais, comprenant au moins un équipement (316₁-316₄) de connexion réseau virtuel et au moins une machine virtuelle (318,320).

11. Appareil informatique (200) pour l'accès d'au moins un terminal utilisateur (306) à au moins un service informatique distant (312) au travers d'un réseau de communication (302) de type Internet, ledit appareil (200) comprenant :
- au moins un moyen (202) de connexion à au moins un terminal utilisateur (306),
- au moins un moyen (204) de connexion à un réseau local (308) ou à un réseau de communication (302) de type Internet, et
- et des moyens (206-212) configurés pour réaliser les étapes suivantes pour chaque terminal utilisateur (306) connecté audit appareil (200) :
• réception (102) d'une requête d'accès à un service informatique (312) dudit terminal utilisateur (306),
• exécution d'au moins un programme informatique (314), dit module de configuration,
• exécution d'au moins un équipement de réseau virtuel (316), dit de connexion, réalisant la connexion dudit terminal utilisateur (306) audit module de configuration (314),
• sélection (126), par ledit module de configuration (314) et en fonction d'au moins une donnée relative audit service informatique (312) **et/ou** d'au moins une donnée relative au contexte d'accès, d'au moins une machine virtuelle (318,320) à exécuter pour établir une connexion avec au moins un serveur distant (310) fournissant ledit service informatique (312), et
• déclenchement (128) de l'exécution de ladite au moins une machine virtuelle (318,320) pour fournir ledit service (312) audit terminal utilisateur (306).

12. Système (300) d'accès à au moins un service informatique (312) au travers d'un réseau de communication (302) **caractérisé en ce qu'**il comprend :
- au moins un terminal utilisateur (306),
- au moins un serveur distant (310) associé audit au moins un service informatique (312) ; et
- soit au moins un équipement informatique (200), dit boitier d'accès (304), selon la revendication précédente, disposé entre ledit au moins un terminal utilisateur (306) et ledit réseau de communication (302),
soit des moyens pour mettre en oeuvre toutes les étapes du procédé selon l'une quelconque des revendications 1 à 10.

## Patentansprüche

1. Verfahren (100) für den Zugriff, mit einem Benutzerendgerät (106), auf einen entfernten Computerdienst (312) über ein Kommunikationsnetz (302) und eine Computereinrichtung (304), sogenannte Zugangsbox, wobei das Verfahren die folgenden Schritte umfasst:
- Senden (102) einer Anfrage für den Zugriff auf den Computerdienst (312) von dem Benutzerendgerät (106) an die Zugangsbox (304),
- Ausführen (106) wenigstens eines Computerprogramms (314), sogenannten Konfigurationsmoduls, in der Zugangsbox (304),
- Ausführen (114) wenigstens einer virtuellen Netzeinrichtung (316), sogenannten Verbindungseinrichtung, in der Zugangsbox (304), welche die Verbindung des Benutzerendgerätes (304) mit dem Konfigurationsmodul (314) herstellt,
- Auswählen (126) - durch das Konfigurationsmodul (304) und in Abhängigkeit von wenigstens einer Angabe bezüglich des Computerdienstes (312) **und/oder** wenigstens einer Angabe bezüglich des Zugriffskontextes - wenigstens einer auszuführenden virtuellen Maschine (318, 320), um eine Verbindung mit wenigstens einem entfernten Server (310), welcher den Computerdienst (312) bereitstellt, herzustellen, und
- Auslösen (128) der Ausführung der wenigstens einen virtuellen Maschine (318 - 320), um den Computerdienst (312) im Bereich des Benutzerendgerätes (304) bereitzustellen.

2. Verfahren (100) nach Anspruch 1, **dadurch gekennzeichnet, dass** es ferner einen Schritt zur Analyse der Zugriffsanfrage umfasst, um den Dienst, auf den das Benutzerendgerät (306) zugreifen möchte, zu identifizieren.

3. Verfahren (100) nach einem der vorhergehenden Ansprüche, **dadurch gekennzeichnet, dass** das Konfigurationsmodul (314) von einem entfernten Server (310) der Box (304) aus, nach dem Schritt (102) des Sendens der Zugriffsanfrage, über das Kommunikationsnetz (302) in die Zugangsbox (304) geladen wird.

4. Verfahren (100) nach dem vorhergehenden Anspruch, **dadurch gekennzeichnet, dass** das Laden des Konfigurationsmoduls (314) von einem entfernten Server (310) aus durch einen weiteren entfernten Server der Zugangsbox (304), sogenannten Anschlussserver, ausgelöst wird.

5. Verfahren (100) nach einem der vorhergehenden Ansprüche, **dadurch gekennzeichnet, dass** die Einrichtung zur virtuellen Netzverbindung (316) von einem entfernten Server (310) der Box (304) über das Kommunikationsnetz (302) vor deren Ausführung in die Zugangsbox (304) geladen wird.

6. Verfahren (100) nach einem der vorhergehenden Ansprüche, **dadurch gekennzeichnet, dass** die Einrichtung zur virtuellen Netzverbindung (316) ein virtueller Zugangspunkt ist, insbesondere ein Wifi-Zugangspunkt, der auf das Konfigurationsmodul (314) zugeschnitten ist.

7. Verfahren (100) nach einem der vorhergehenden Ansprüche, **dadurch gekennzeichnet, dass** es ferner ein Auslösen der Ausführung wenigstens einer virtuellen Maschine entfernt von der Zugangsbox (304) durch das Konfigurationsmodul (314) umfasst.

8. Verfahren nach einem der vorhergehenden Ansprüche, **dadurch gekennzeichnet, dass** wenigstens eine virtuelle Maschine (318, 320) durch Instanziierung einer virtuellen Maschine, die in der Zugangsbox (304) lokal gespeichert ist, erhalten wird.

9. Verfahren nach einem der vorhergehenden Ansprüche, **dadurch gekennzeichnet, dass** es eine Aktualisierung wenigstens einer virtuellen Maschine (318, 320) und/oder wenigstens einer Einrichtung zur virtuellen Netzverbindung (316) im Laufe der Verwendung in Abhängigkeit von wenigstens einer Angabe bezüglich des Zugriffskontextes und/oder des Dienstes umfasst.

10. Verfahren (100) zum Verwalten des Zugriffs von wenigstens zwei Benutzerendgeräten (306₁ - 306₄) auf wenigstens einen Dienst (312₁ - 312₄) über wenigstens ein Kommunikationsnetz (302) und eine gleiche Zugangsbox (304), **dadurch gekennzeichnet, dass** es eine individuelle und unabhängige Durchführung des Zugriffsverfahrens nach einem der vorhergehenden Ansprüche für ein jedes Benutzerendgerät (306₁ - 306₄) umfasst, so dass die Zugangsbox (304) für ein jedes Benutzerendgerät (306₁ - 306₄) umfasst:
- ein Konfigurationsmodul (314₁ - 314₄) und
- eine sogenannte Weitergabebehälter-Anordnung (322₁ - 322₄), die wenigstens eine Einrichtung (316₁ - 316₄) zur virtuellen Netzverbindung und wenigstens eine virtuelle Maschine (318, 320) umfasst.

11. Computervorrichtung (200) für den Zugriff von wenigstens einem Benutzerendgerät (306) auf wenigstens einen entfernten Computerdienst (312) über ein Kommunikationsnetz (302) vom Typ Internet, wobei die Vorrichtung (200) umfasst:
- wenigstens ein Mittel (202) zur Verbindung mit wenigstens einem Benutzerendgerät (306),
- wenigstens ein Mittel (204) zur Verbindung mit einem lokalen Netzwerk (308) oder mit einem Kommunikationsnetz (302) vom Typ Internet, und
- Mittel (206 - 212), die dazu ausgelegt sind, die folgenden Schritte für jedes mit der Vorrichtung (200) verbundene Benutzerendgerät (306) zu vollziehen:
• Empfangen (102) einer Anfrage für den Zugriff auf einen Computerdienst (312) von dem Benutzerendgerät (306),
• Ausführen wenigstens eines Computerprogramms (314), sogenannten Konfigurationsmoduls,
• Ausführen wenigstens einer virtuellen Netzeinrichtung (316), sogenannten Verbindungseinrichtung, welche die Verbindung des Benutzerendgerätes (306) mit dem Konfigurationsmodul (314) herstellt,
• Auswählen (126) - durch das Konfigurationsmodul (314) und in Abhängigkeit von wenigstens einer Angabe bezüglich des Computerdienstes (312) **und/oder** wenigstens einer Angabe bezüglich des Zugriffskontextes - wenigstens einer auszuführenden virtuellen Maschine (318, 320), um eine Verbindung mit wenigstens einem entfernten Server (310), welcher den Computerdienst (312) bereitstellt, herzustellen, und
• Auslösen (128) der Ausführung der wenigstens einen virtuellen Maschine (318 - 320), um dem Benutzerendgerät (306) den Dienst (312) bereitzustellen.

12. System (300) für den Zugriff auf wenigstens einen Computerdienst (312) über ein Kommunikationsnetz (302), **dadurch gekennzeichnet, dass** es umfasst:
- wenigstens ein Benutzerendgerät (306),
- wenigstens einen entfernten Server (310), der dem wenigstens einen Computerdienst (312) zugeordnet ist, und
- entweder wenigstens eine Computereinrichtung (200), sogenannte Zugangsbox (304), nach dem vorhergehenden Anspruch, die zwischen dem wenigstens einen Benutzerendgerät (306) und dem Kommunikationsnetz (302) angeordnet ist,
- oder Mittel für die Durchführung aller Schritte des Verfahrens nach einem der Ansprüche 1 bis 10.

## Claims

1. Method (100) for accessing a remote computer service (312) via a user terminal (106) over a communications network (302), and a computer equipment (304), called access device, said method comprising the following steps:
- sending (102) a request to access said computer service (312), from said user terminal (106) to said access device (304),
- executing (106), in said integrated access device (304), at least one computer program (314), called configuration module,
- executing (114), in said access device (304), at least one virtual network equipment (316), called connection equipment, connecting said user terminal (304) to said configuration module (314),
- selecting (126), by said configuration module (304) and as a function of at least one data item relating to said computer service (312) **and/or** at least one data item relating to the context of access, at least one virtual machine (318,320) to be executed in order to establish a connection with at least one remote server (310) providing said computer service (312), and
- initiating (128) the execution of said at least one virtual machine (318-320) in order to provide said computer service (312) on said user terminal (304).

2. The method (100) according to claim 1, **characterized in that** it also comprises a step of analyzing the access request in order to identify the service to which the user terminal (306) seeks to gain access.

3. The method (100) according to any one of the preceding claims, **characterized in that** the configuration module (314) is loaded into the access device (304) from a server (310) remote from said access device (304) over the communications network (302), after the step (102) of sending the access request.

4. The method (100) according to the preceding claim, **characterized in that** loading of the configuration module (314) from a remote server (310) is initiated by another server remote from the access device (304), called registry server.

5. The method (100) according to any one of the preceding claims, **characterized in that** the virtual network connection equipment (316) is loaded into the access device (304) from a server (310) remote from said access device (304) over the communications network (302), prior to its execution.

6. The method (100) according to any one of the preceding claims, **characterized in that** the virtual network connection equipment (316) is a virtual access point, in particular a Wifi access point, dedicated to the configuration module (314).

7. The method (100) according to any one of the preceding claims, **characterized in that** it also comprises initiation by said configuration module (314) of the execution of at least one virtual machine, remote from said access device (304).

8. The method according to any one of the preceding claims, **characterized in that** at least one virtual machine (318,320) is obtained by instantiation of a virtual machine stored locally in the access device (304).

9. The method according to any one of the preceding claims, **characterized in that** it comprises updating at least one virtual machine (318,320) and/or at least one virtual network connection equipment (316) during use, as a function of at least one data item relating to the context of access and/or to the service.

10. The method (100) of managing the access of at least two user terminals (306₁-306₄) to at least one service (312₁-312₄) over at least one communications network (302) and from one and the same access device (304), **characterized in that** it comprises individual and independent execution of the access method according to any one of the preceding claims for each user terminal (306₁-306₄) so that the access device (304) comprises, for each user terminal (306₁-306₄):
- a configuration module (314₁-314₄), and
- an ensemble (322₁-322₄), called relay-container, comprising at least one virtual network equipment (316₁-316₄) and at least one virtual machine (318,320).

11. Computer device (200) for at least one user terminal (306) to access at least one remote computer service (312) over a communications network (302) of the Internet type, said device (200) comprising:
- at least one means (202) for connecting to at least one user terminal (306),
- at least one means (204) for connecting to a local network (308) or to a communications network (302) of the Internet type, and
- means (206-212) configured to carry out the following steps for each user terminal (306) connected to said device (200):
• receiving (102) a request for access to a computer service (312) from said user terminal (306),
• executing at least one computer program (314), called configuration module,
• executing at least one virtual network equipment (316), called connection equipment, connecting said user terminal (306) to said configuration module (314),
• selecting (126), by said configuration module (314) and as a function of at least one data item relating to said computer service (312) **and/or** at least one data item relating to the context of access, at least one virtual machine (318,320) to be executed in order to establish a connection with at least one remote server (310) providing said computer service (312), and
• initiating (128) the execution of said at least one virtual machine (318,320) in order to provide said service (312) to said user terminal (306).

12. System (300) for accessing at least one computer service (312) over a communications network (302) **characterized in that** it comprises:
- at least one user terminal (306),
- at least one remote server (310) associated with said at least one computer service (312); and
- either at least one computer equipment (200), called access device (304), according to the preceding claim, arranged between said at least one user terminal (306) and said communications network (302),
- or means for implementing all the steps of the method according to any one of claims 1 to 10.
